# EUROPEAN PATENT SPECIFICATION

(11) **EP 4 613 527 B1**
(45) Date of publication and mention of the grant of the patent: **27.05.2026**
(21) Application number: 25159129.3
(22) Date of filing: 20.02.2025
(51) Int. Cl.: B60K 7/00, B60K 17/04, H02K 5/20, H02K 5/22, H02K 7/116, H02K 7/14, F16H 1/46, F16H 57/04

(54) **MOTORIZED WHEEL HUB AND INDUSTRIAL VEHICLE INCLUDING THE WHEEL HUB**
MOTORISIERTE RADNABE UND INDUSTRIEFAHRZEUG MIT DER RADNABE
MOYEU DE ROUE MOTORISÉ ET VÉHICULE INDUSTRIEL COMPRENANT LE MOYEU DE ROUE

(30) Priority: 06.03.2024 IT 202400004987
(43) Date of publication of application: 10.09.2025
(73) Proprietor: IVECO S.P.A., 10156 Torino (IT)
(72) Inventor: AIMO BOOT, Marco, 10156 TORINO (IT); FRANCIVALDO, Jose, 10156 TORINO (IT)
(74) Representative: Fiume, Orazio

(56) References cited:
- CN-A- 107 284 224
- CN-A- 116 707 204
- DE-C5- 19 732 637
- US-A- 3 812 928

## Description

### Field of the invention

The present invention relates to the field of motorized wheel hubs and industrial vehicles implementing such wheel hubs. CN116707204 discloses all the features of the preamble of claim 1.

### State of the art

The implementation of hubs integrating electric motors for vehicle propulsion is known. In the field of industrial vehicles for the road transport of goods and/or people, there are specific requirements to be met.

The propulsion system must be able to express a high torque to move vehicles of significant weight and at the same time must allow reaching speeds compatible with traditional vehicles equipped with internal combustion engines. Satisfying these requirements is not easy, especially in relation to the fact that the volume available for the installation of the electric motor is limited.

Furthermore, it is necessary to satisfy stringent requirements in terms of driving torque.

### Summary of the invention

The purpose of the present invention is to insert, inside a standard-sized wheel rim, an electric motor for the vehicular propulsion of a vehicle intended for road transportation.

The invention is defined by the independent claim.

The basic idea of the present invention is to create a wheel hub comprising a fixed spindle of longitudinal shape along a development axis, rotatably supporting a bell arranged to support at least one rim and in which in a defined volume between the spindle and the bell a transmission and an electric motor are arranged, wherein the bell is made of two separable parts and wherein the transmission is housed in the first part and is intended to support the rim, while the electric motor is housed in the second part of the bell.

The second part of the bell, with the electric motor inside, is easily removable from the first part of the bell where the transmission is housed.

Both the first and second parts of the bell have a tubular shape, therefore, in operating conditions, the electric motor is in an axial position with respect to the transmission: this implies that the electric motor is housed next to the transmission, according to the axial direction defined by the spindle.

Advantageously, the fact that at least a portion of the electric motor is housed in the second part of the bell, which is disconnectable from the first part of the bell, allows the creation of an electric motor with a diameter greater than the rim opening, allowing greater power/torque to be obtained without creating oversized rims.

Therefore, the first part of the bell has a diameter compatible with the opening of a standard rim, while the second part of the bell, wherein the electric motor is housed, has a diameter larger than the opening of the standard rim.

This solution can also be implemented in 50-ton vehicles.

The fixing of the second part of the bell on the first part of the bell allows the stator of the electric motor to be connected to the spindle and the rotor to the input port of the transmission in order to rotate the first part of the bell to which at least one rim is intended to be fixed. Another advantage that follows the present invention is the fact that the first portion of the bell, with the relative components included in it, can be combined with electric motors of different power, obtaining a modular system.

In conditions of disconnection of the second part of the bell from the first part of the bell, the rotor and at least a first portion of the stator are housed in the second part of the bell, while a second portion of the stator operatively connected to a cooling circuit and to an electrical power line remain stably connected to the spindle, protruding externally with respect to the first part of the bell.

Advantageously, it is possible to remove the second part of the bell without intervening on the cooling circuit of the electric motor and therefore without having to perform any purging operation.

According to a preferred aspect of the invention, the coupling of the second portion of the bell to the first portion of the bell simultaneously allows to realize
- The mechanical connection of the stator of the electric motor with the spindle of the wheel,
- The mechanical connection between the rotor of the electric motor and the input port of the transmission,
- The electrical connection of the stator windings with the power circuit of the electric motor housed in the spindle.

The removal of the second part of the bell allows to disconnect/connect the rim from/to the hub.

The dependent claims describe preferred variants of the invention.

### Brief description of the Figs.

Further purposes and advantages of the present invention will be clear from the detailed description that follows of an example of its embodiment (and its variants) and from the attached drawings given purely for explanatory and nonlimiting purposes, in which:
Figs. 1a and 1b show a first variant of the invention in the operating condition and in the maintenance condition, respectively;
Figs. 2a and 2b show a second variant of the invention in the operating condition and in the maintenance condition, respectively;

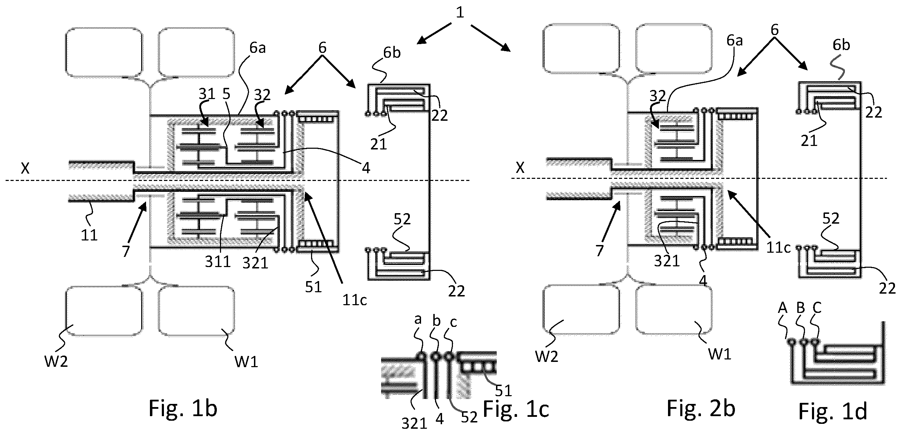

Figs. 1c and 1d show enlargements of portions of Fig. 1b;

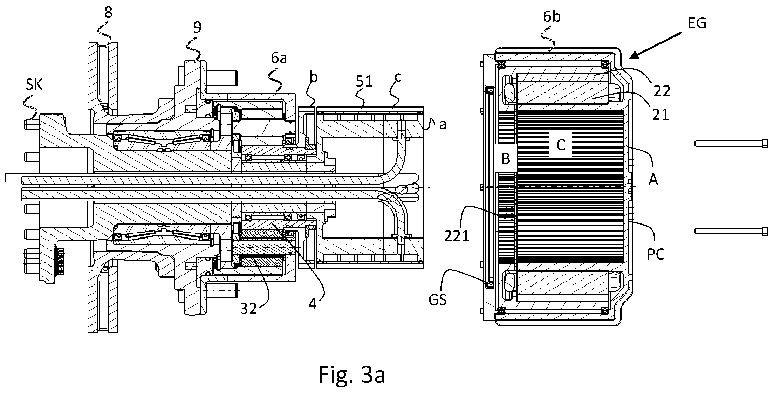

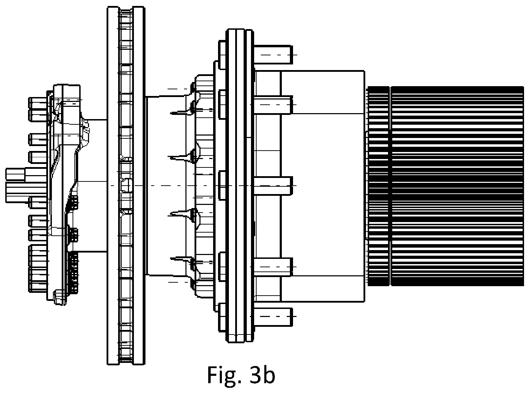

Fig. 3a shows a longitudinal section of an implementing variant of the scheme of Fig. 2b and Fig. 3b shows a lateral view corresponding to a portion of the longitudinal section of Fig. 3a;

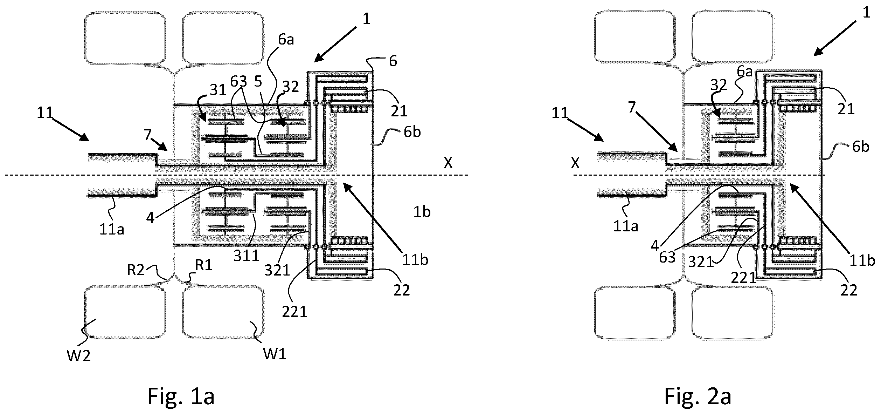

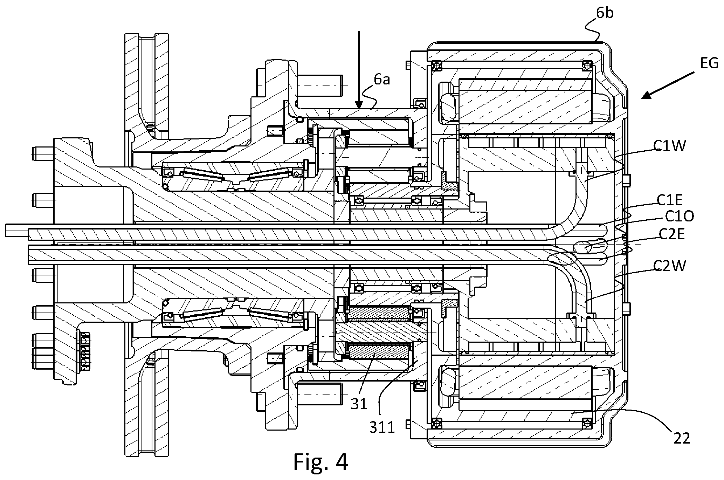

Fig. 4 shows a longitudinal section of an implementing variant of the scheme of Fig. 2a;

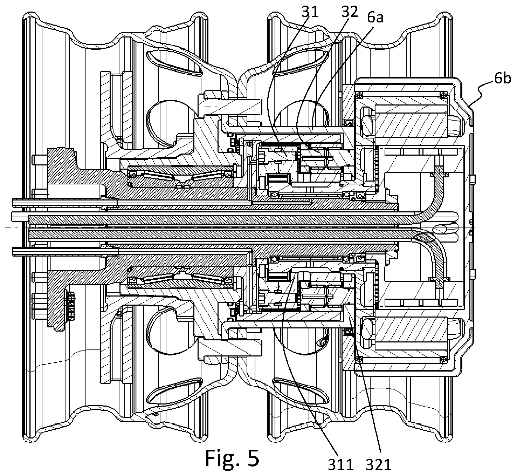

Fig. 5 shows a longitudinal section of an implementing variant of the scheme of Fig. 1a to which two rims have been associated;

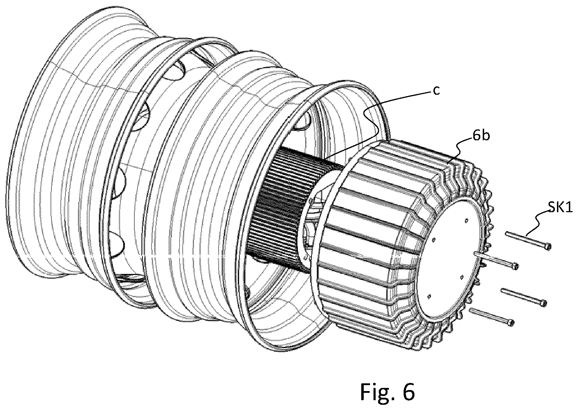

Fig. 6 shows a three-dimensional view of the hub in the maintenance configuration corresponding to Figs. 1b and 2b;

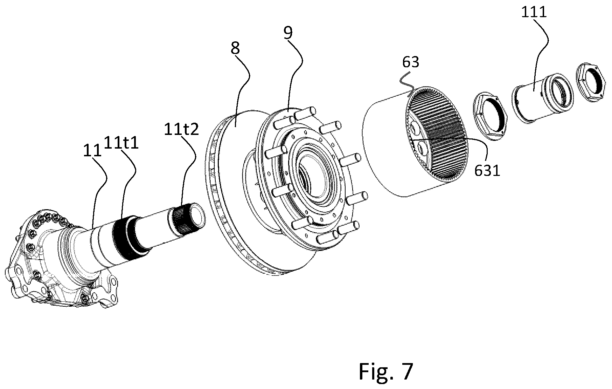

Figs. 7 - 9 show an exploded view of the embodiment according to Fig. 5;

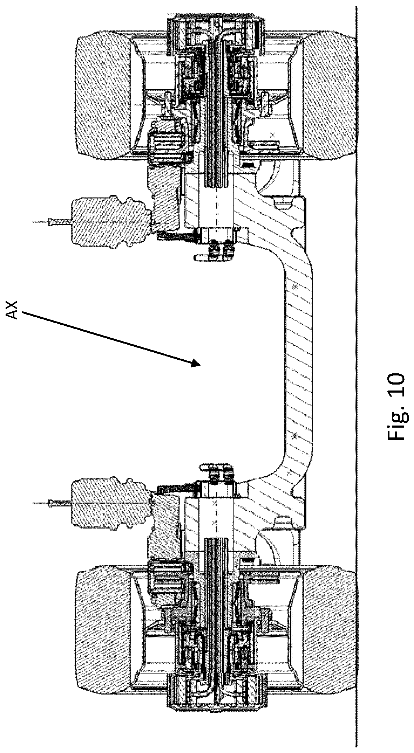

Fig. 10 shows a sectional view of an example of an axle equipped with a wheel hub according to any of the preceding Figs.

The same reference numbers and letters in the Figs. identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

### Detailed description

Figs. 1a and 1b show preferred examples of the wheel hub 1 according to the present invention. Hereinafter the "wheel hub" is sometimes referred to as "hub", for convenience.

The hub 1 comprises a fixed spindle 11, of longitudinal shape arranged to rotatably support a bell 6 configured to support at least one vehicular wheel W1, W2.

Preferably, the spindle has a tubular shape, in which the cooling ducts of the electric motor, the transmission lubrication ducts and the electric power cables of the electric motor described below are housed.

The wheel, in a manner known in itself, comprises a rim R1, R2 and a tire mounted on the rim.

The spindle and bell assembly has an approximately axial symmetry with respect to the development axis X and in particular an approximately rotational symmetry. The "about" indicates that some fixed portions, associated with the spindle, may have shapes or components that are not symmetrical with respect to the development axis X, such as for example the flange for fixing the spindle to a vehicle suspension (not shown) or to components of lesser importance described below, such as for example electrical connectors, water pipes, etc.

Between the spindle 11 and the bell 6, i.e. the set of the portions 6a and 6b, a preferably closed volume is defined, in operating conditions, in which an electric motor 2 and a transmission 3 are housed.

The first portion 6a is rotatably supported by the spindle, while the second portion 6b is fixed with respect to the spindle.

The transmission 3 and the electric motor are arranged in a mutually axial position, i.e. one next to the other along the direction indicated by the development axis X.

The electric motor 2 is preferably radial flow.

In operating conditions, the hub 1 defines a first end 11a of the spindle, internal, intended to be fixed to a vehicle suspension and a second end 11b, external, opposite to the first and accessible by removing the second portion 6b of the bell 6.

The second end 11b is configured to permanently support the stator of the electric motor 2.

More specifically, observing Figs. 1b and 2b, the second end 11b defines a connection interface 51 with the stator 21 of the electric motor, equipped with a liquid cooling circuit.

Advantageously, the disconnection of the electric motor 2 enclosed in the second part 6b of the bell 6 does not involve any disconnection of the liquid cooling circuit which remains connected to the spindle. This means that it is possible to disconnect the electric motor and replace, for example, a wheel W1, W2, without having to intervene on the cooling circuit by performing bleeding operations.

The stator 21 of the electric motor, comprising an internal face 52 complementary to the interface 51 of the spindle.

The internal face 52 and the interface 51 preferably have an annular development with respect to the development axis X and preferably according to an approximately cylindrical surface coaxial with the development axis X.

In particular, as visible in Figs. 3a and 4, the internal face 52 and the interface 51 are configured to come into mutual contact preventing rotation of the stator with respect to the spindle. For example, at least one longitudinal groove may be provided with a complementary coupling crest or a splined joint type coupling may be provided.

In other words, the stator is connected to the spindle by means of an anti-rotation coupling which may also be obtained by creating straight teeth similar to a dog-clutch on a flat surface transverse to the development axis X or with longitudinal grooves of a splined joint.

Preferably, the transmission 3 comprises a single- or multi-stage epicyclic gear train with at least two stages.

In the case of a multi-stage gear train, it evidently comprises two planetary cages 311 and 321, see Figs. 1a, 1b, 5. The "planetary cages" may also be called "train carriers".

The second satellite cage 321, preferably, according to an axial direction, is located in an intermediate position between the stator 21 of the electric motor 2 and the first satellite cage 311.

The rotor 22 of the electric motor 2 is configured to transmit motion to the satellites 31 of the first satellite cage 311.

The rotor 22 of the electric motor 2 is configured to transmit motion to the satellites 31 of the first satellite cage 311 by means of the sleeve 4, rotatably supported by the spindle 11. The rotor 22 comprises an annular wall 221 equipped with a central opening equipped with teeth, intended to transmit motion to the sleeve 4 by means of the wheel 421.

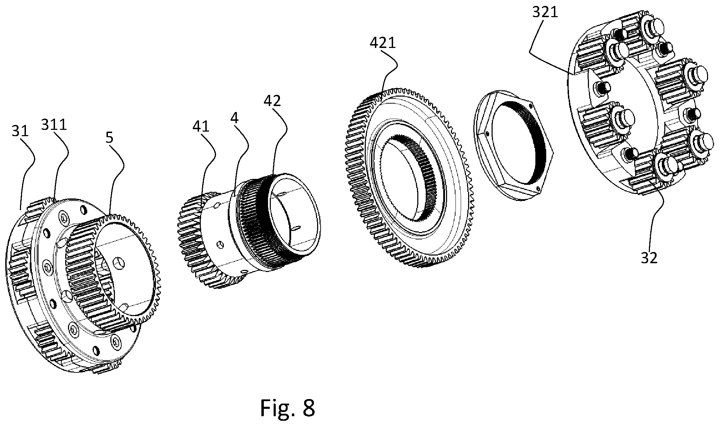

In particular, to allow the disconnection of the electric motor from the remaining hub, there is a toothed wheel 421, see Fig. 8, which has an internal toothing to engage with the external toothing 42 of the sleeve 4 and an external toothing to engage on the internal teeth of the annular wall 221.

Therefore, the annular wall 221 and the gear wheel 421, in operating conditions, are coplanar and perpendicular to the development axis X.

The sleeve 4, therefore, defines the sun gear of the first or only epicyclic gearing in relation to the implementation of a multi-stage or single-stage transmission.

The sun gear of the epicyclic gearing represents the first port of the transmission, while the second port of the epicyclic gearing is represented by the first portion 6a of the bell connected to the satellite cage of the second or only epicyclic gearing.

The first satellite cage 311, in the case of a multi-stage transmission, is integral with a toothed ring 5 arranged to transmit the motion to the satellites 32 of the second satellite cage 321.

Therefore, the toothed ring 5 defines the sun gear of the second epicyclic gearing.

The second satellite cage is configured to rotate the first portion of the bell 6a and therefore the at least one vehicle wheel W1, W2.

When, however, the transmission is single-stage, then the satellite cage 32 of the single stage of the epicyclic gear train is configured to rotate the first portion of the bell and therefore the at least one vehicle wheel W1, W2.

Both the first epicyclic gear train and the second epicyclic gear train, or the single epicyclic gear train, are preferably with axes parallel to each other and parallel to the development axis X of the spindle. This fact implies that the couplings between the satellites S1 and the sleeve 4, between the crown 5 and the satellites 32 and between the satellites 31 and 32 and the crown 63 are along planes perpendicular to the development axis X.

The crown 63, see Fig. 7, is integral with the spindle 11 and at least the satellites of at least one of the stages of the epicyclic gearing of the transmission mesh on it. Preferably, the satellites of both stages engage on the same crown 63.

Between the transmission 3 and the first end 11a of the hub, a rotating coupling area 7 is identified between the bell 6 and the spindle 1. Bearings are preferably housed in this area.

Figs. 7 - 9 represent the exploded view of the same embodiment of the hub 1 according to the present invention. The exploded view, divided between the two Figs. 7 - 9, shows in Fig. 7 the components closest to the end 11a of the spindle 11. Starting from the left of the sheet, we can identify
- the spindle 11,
- the brake disc 8 integral with the first portion of the bell 6a (not shown in Fig. 7),
- the flange 9 for fixing the at least one vehicle wheel W1, W2,
- the fixed crown 63, internally toothed,
- a spacer 111 to keep in position the bearings, not shown, supporting the sleeve 4;
- fixing rings, arranged to thread on the spindle 11.

The fixed crown 63 has an internal wall 631 equipped with teeth to engage with a complementary toothing 11t1 obtained on the spindle. This fixed crown 63 forces the satellites 31 of the first satellite cage 311 to rotate, as well as the satellites 32 of the second satellite cage 321. Therefore, the same fixed crown 63 has an axial extension such as to collect both the first and the second satellite cage. Continuing with Fig. 8 from the left of the sheet, we can identify:
- the first satellite cage 311, with the relative satellites 31, in which the first satellite cage is one piece with
- the toothed ring 5, externally toothed, on which the satellites 32 of the second satellite cage 321 mesh,
- the sleeve 4, comprising a first end 41 equipped with a first external toothing to mesh with the satellites 31 of the first satellite cage 311, defining the aforementioned sun gear, and a second end 42, opposite the first end, equipped with an external toothing intended to engage the internal toothing of the wheel wall 421.

The stator support portion intended to be fixed to the end 11b of the spindle is not shown.

The wheel 421 acts as an intermediary between the sleeve 4 and the internal annular wall 221 equipped with a toothed central hole.

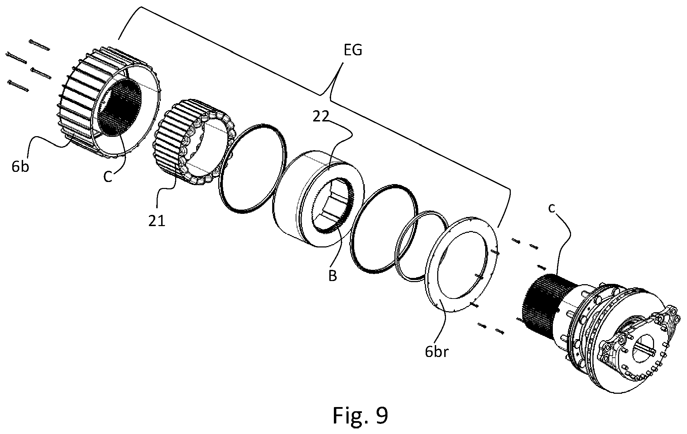

Continuing with Fig. 9, from the left of the sheet we can identify:
- the first portion 6a of the bell 6, substantially cylindrical in shape,
- the stator 21 equipped with the relative coils arranged in an annular way to form a toroid,
- the rotor 22 of the electric motor 2 equipped with the toothed annular wall 221 defining the interface b shown in Fig. 1c,
- the second portion 6b of the bell 6, defining a sort of cap in which the rotor 22 and the stator 21 are enclosed in operating conditions,
- the annular wall 6br
- bearings BR supporting the rotor.

The portion 6b of the bell has a toroidal shape with one of the two removable bases and defined by the annular wall 6br. Thanks to the removal of the annular wall 6br it is possible to insert the stator windings 21, the bearings BR and the rotor.

When the portion 6b of the bell contains the stator 21 and the rotor 22 and is closed by the annular wall 6br, the assembly thus constituted is hereinafter referred to as the "motor assembly".

From the above description, the motor assembly can be released from the remaining part of the hub 1 by means of an axial movement after the removal of connection means SK1 such as screws or other equivalent devices.

The first portion 6a of the bell comprises a base 6a.1 for fixing it to the flange 9 shown in Fig. 3a.

From the examination of the Figs. it is clear that the electric motor 2 has a diameter greater than the diameter of the transmission 3. In fact, observing Fig. 4 it is noted that the diameter DS of the first portion of the bell is less than the diameter DL of the second portion of the bell.

This allows the containment of the radial dimensions of the hub at the fixing point of the rims in order to be able to implement rims of standard dimensions for industrial road vehicles.

Figs. 3a, 4, 5 show longitudinal sections of examples of hub according to the previous Figs..

From these Figs. it is appreciated that the flange 9 is supported by a system of opposing conical bearings, generically indicated with the sign 7.

The brake disc 8 is fixed to the flange 9 by means of fixing screws.

The spindle is equipped with a toothing 11t2 in a proximal position to the end 11b for fixed coupling with the support interface 51 of the stator 21 of the electric motor 2. Furthermore, the spindle, at the end 11a is equipped with a flange for connection to the suspension equipped with special fixing screws or pins SK.

The rotor 22 of the electric motor 2 is arranged to rotate the sleeve 4, by means of the interface B/b, which engages with the satellites 31 of the first cage, which cause the first cage 311 to rotate by interacting with the crown 63. The first cage 311 in turn is integral with the crown 5, which engages with the satellites 32 of the second cage 321.

These, by interacting with the crown 63, cause the relative satellite carrier cage 321 to rotate, integral with the first portion 6a of the bell, which is fixed on the flange 9 arranged to support the at least one vehicle wheel. Analyzing Figs. 1b, 2b and the related enlargements 1c and 1d, it can be noted that interconnection interfaces A/a, B/b, C/c are represented.

The interfaces with the uppercase letters A, B, C are associated with the portion 6b of the bell, while the interfaces with the lowercase letters a, b, c, are associated with the EG motor group.

Fig. 3b shows a side view of the hub 1 from which the EG motor group has been removed.

The interfaces b and c are clearly visible, represented respectively by the external teeth of the wheel 421 and by the interface surface 51 for anti-rotation and cooling of the stator.

The interface defined by the pair A/a identifies the mechanical fixing in the axial direction of the second portion 6b of the bell to the spindle 11. Therefore, the second portion 6b of the bell is rotationally fixed with respect to the spindle 11.

The stator 21 is housed inside the second portion 6b of the bell with its interface B complementary to the interface b of the spindle.

The two interfaces B/b correspond to the components 52/51 described above, performing an anti-rotation function, i.e. they prevent the stator of the electric motor from rotating around the development axis X.

Furthermore, as described above, the component 51 allows the stator of the electric motor to be cooled.

The rotor 22 is housed inside the second portion of the bell, which has its own interface B, arranged to couple with the interface b defined by the external teeth of the wheel 421 which engages internally with the sleeve 4, which in turn defines the sun gear 41 of the first or only epicyclic gear train.

According to a preferred aspect of the invention, the diameter of the interface b is greater than or equal to the diameter of the interface c, so as to allow the easy removal of the motor unit EG from the remaining wheel hub 1, while it is enclosed in the second portion of the bell. This corresponds to saying that the diameter of the wheel 421 must be greater than or equal to the diameter of the interface 51, since the wheel 421 is arranged between the interface 51 and the transmission.

Obviously, there are also sealing gaskets in order to create a hermetically sealed compartment in which the transmission is housed to contain the lubricating oil necessary for the lubrication and cooling of the moving parts.

There is a sealing gasket GS associated with the lip of the annular wall 6br that overlaps the first portion 6a of the bell.

Fig. 6 shows a three-dimensional view of a wheel hub according to the present invention associated with a pair of twin wheels, in which the partial removal of the electric motor enclosed in the second portion of the bell is observed, with some fixing screws SK1 that define the aforementioned axial coupling interface A.

From Figs. 3a, 5, 6 it can be seen that the spindle is internally hollow allowing the passage of
- electrical conductors C1E, C2E for the electrical power supply of the electric motor 2,
- hydraulic ducts C1W, C2W for the circulation of a refrigerant fluid for cooling the electric motor 2.

As regards the refrigerant fluid circuit, it is preferably made internally to the stator so as not to have to make seals of any kind inside the bell.

As regards the electrical power supply of the electric motor, an electrical contact block associated on one side with the spindle 11 can be provided, and a corresponding connection comb associated with the blind wall PC of the second portion of the bell, so that the insertion of the electric motor support defined by the interface 51, automatically causes the electrical connection of the electric motor to the relative power cables.

Thanks to the present invention, the axle can be shaped in the form of a low saddle allowing the installation of additional vehicle components along the X-axis between the two hubs of the same driving axle, see Fig. 10.

This allows to ensure a low load compartment without loss of performance.

Fig. 10 shows a preferred variant of an AX axle for industrial vehicles implementing the present invention.

In Fig. 10, the wheel hub 1 of the present invention is associated with a single vehicle wheel that has a considerable width.

It can be easily noted that the central part of the AX axle defines the aforementioned low saddle. The AX axle is supported by a pair of suspensions B, for example air.

For this type of vehicle, the rims have approximately an external diameter of 22 - 22.5 inches corresponding to approximately 56cm - 57cm and an internal diameter of approximately 11 inches corresponding to approximately 28 cm.

This last measure is the one that most limits the sizing of the hub in order to contain the electric motor and the transmission.

Preferably, the first epicyclic gear of the transmission is able to achieve a transmission ratio of approximately 3.0: 1, while the second epicyclic gear is able to achieve a transmission ratio of approximately 2.7: 1.

The overall transmission ratio is approximately 8.1: 1.

This transmission ratio is conditioned by the dimensions of the wheel hub, which must obviously be entirely contained in a vehicular wheel of an industrial vehicle for transport on public roads.

From the description given above, the technician in the field is able to realize the object of the invention without introducing further construction details.

## Claims

1. Motorized wheel hub (1) comprising:
- a fixed spindle (11) of longitudinal shape defining an axial direction (X) rotatably supporting
- a bell (6a, 6b) configured to support at least one vehicular wheel (W1, W2), wherein between the spindle (11) and the bell (6) a volume is defined in which are housed
- an electric motor (2) and
- a transmission (3),
wherein the electric motor is arranged axially with respect to the transmission (3), wherein the bell is made in at least two portions (6a, 6b), wherein the transmission (3) is housed in a first portion (6a) and the electric motor (2) is housed in a second portion (6b), and wherein the second portion has a diameter (DL) greater than a diameter (DS) of the first portion and is disconnectable from the first portion.

2. Hub according to claim 1, wherein the second portion of the bell is enclosing a stator (21) and a rotor (22) of the electric motor (2) defining a single component connectable and disconnectable from the wheel hub (1) by means of an axial engagement/disengagement.

3. Hub according to claim 2, wherein said spindle comprises an interface surface (51) mating with said stator.

4. Hub according to claim 2 or 3, wherein said transmission comprises an input port defined by a wheel (421) having external teeth and wherein said rotor (22) comprises an annular wall (221) provided with a central opening provided with teeth that engage with said wheel (421).

5. Hub according to claim 3 and 4, wherein said wheel (421) is interposed between the transmission and said interface (51) and has a diameter greater than or equal to a diameter of said interface (51).

6. Hub according to any of the preceding claims, wherein the transmission comprises an epicyclic gear train.

7. Hub according to claim 6 when dependent on claim 4 or 5, wherein the wheel (421) is operatively connected to a sleeve (4) rotatably supported by the spindle (11) to rotate satellites (31) of at least a first satellite carrier cage (311).

8. Hub according to claim 7, wherein said first satellite cage (311) is integral with a crown (5) to rotate the satellites (32) of at least one second satellite cage (321) .

9. Hub according to claim 7 or 8, wherein said first or said second satellite cage is respectively operatively connected to said first portion (6a) of the bell to rotate it.

10. Hub according to any of claims 7 - 9, further comprising a crown (63), internally toothed, fixed with respect to the spindle and simultaneously meshing with said satellites (31, 32).

11. Hub according to any of the preceding claims, wherein the spindle is hollow and in whose cavity are housed at least
- electrical conductors (C1E, C2E) for the electrical supply of the electric motor (2) and/or
- first hydraulic ducts (C1W, C2W) for the circulation of a refrigerant fluid for cooling the electric motor (2) and/or
- second hydraulic ducts (C10, not shown) for the circulation of hydraulic oil for the purpose of lubricating and cooling the transmission (3).

12. Hub according to any of the preceding claims 3 or 4 - 11 when dependent on claim 3, wherein said stator comprises an internal face (52) complementary to said interface surface (51) of the spindle, so as to provide an anti-rotation coupling, for example a splined joint.

13. Hub according to claim 12, wherein said interface surface (51) includes a liquid heat exchanger.

14. Hub according to claim 13 when dependent on claim 11, wherein the spindle is hollow and in whose cavity are housed
- first hydraulic ducts (C1W, C2W) for the circulation of a refrigerant fluid for cooling the electric motor (2) and/or
- second hydraulic ducts (C10, C2O) for the circulation of hydraulic oil for the purpose of lubricating and cooling the transmission (3),
and wherein said heat exchanger is operatively connected with said hydraulic ducts and completely integrated in the spindle (11).

15. Industrial vehicle for the transport of goods and people on public roads comprising a vehicular axle (AX) comprising, at the respective opposite ends, motorized wheel hubs (1) according to any of the preceding claims 1 - 14.

## Patentansprüche

1. Motorisierte Radnabe (1) umfassend :
- eine feststehende, längsgerichtete, eine axiale Richtung (X) definierende Spindel (11), die drehbar
- eine Glocke (6a, 6b) trägt, welche mindestens ein Fahrzeugrad (W1, W2) aufnimmt, wobei zwischen der Spindel (11) und der Glocke (6) befindet sich ein Volumen, in dem
- ein Elektromotor (2) und
- ein Getriebe (3) untergebracht sind,
wobei der Elektromotor ist axial zum Getriebe (3) angeordnet, und die Glocke besteht aus mindestens zwei Teilen (6a, 6b), wobei das Getriebe (3) in einem ersten Teil (6a) und der Elektromotor (2) in einem zweiten Teil (6b) untergebracht ist, und wobei der zweite Teil hat einen Durchmesser (DL), der größer ist als der Durchmesser (DS) des ersten Teils, und ist vom ersten Teil trennbar.

2. Nabe nach Anspruch 1, wobei der zweite Teil der Glocke einen Stator (21) und einen Rotor (22) des Elektromotors (2) umschließt und eine einzige Komponente bildet, die mittels axialer Eingriffs-/Trennvorrichtung mit der Radnabe (1) verbunden und getrennt werden kann.

3. Nabe nach Anspruch 2, wobei die Spindel eine Schnittstelle (51) zum Eingriff mit dem Stator aufweist.

4. Nabe nach Anspruch 2 oder 3, wobei das Getriebe eine durch ein Rad (421) mit Außenverzahnung gebildeten Eingangsöffnung aufweist und der Rotor (22) eine ringförmige Wand (221) mit einer zentralen Öffnung aufweist, die mit Zähnen versehen ist, welche in das Rad (421) eingreifen.

5. Nabe nach Anspruch 3 und 4, wobei das Rad (421) zwischen dem Getriebe und der Schnittstelle (51) angeordnet ist und einen Durchmesser aufweist, der größer oder gleich dem Durchmesser der Schnittstelle (51) ist.

6. Nabe nach einem der vorhergehenden Ansprüche, wobei das Getriebe ein Planetengetriebe umfasst.

7. Nabe nach Anspruch 6, abhängig von Anspruch 4 oder 5, wobei das Rad (421) mit einer Hülse (4) wirksam verbunden ist, die drehbar von der Spindel (11) gelagert ist, um Satelliten (31) mindestens eines ersten Satellitenträgerkäfigs (311) zu drehen.

8. Nabe nach Anspruch 7, wobei der erste Satellitenträgerkäfig (311) mit einem Kronenstück (5) einstückig ist, um die Satelliten (32) mindestens eines zweiten Satellitenträgerkäfigs (321) zu drehen.

9. Nabe nach Anspruch 7 oder 8, wobei der erste bzw. der zweite Satellitenträgerkäfig jeweils mit dem ersten Abschnitt (6a) der Glocke wirksam verbunden ist, um diesen zu drehen.

10. Nabe nach einem der Ansprüche 7 bis 9, ferner umfassend eine innenverzahnte Krone (63), die auf der Spindel befestigt ist und mit den Satelliten (31, 32) gleichzeitig kämmt.

11. Nabe nach einem der vorhergehenden Ansprüche, wobei die Spindel hohl ist und in deren Hohlraum mindestens Folgendes angeordnet ist:
- elektrische Leiter (C1E, C2E) zur Stromversorgung des Elektromotors (2) und/oder
- erste Hydraulikkanäle (C1W, C2W) zur Zirkulation eines Kältemittels zur Kühlung des Elektromotors (2) und/oder
- zweite Hydraulikkanäle (C10, nicht dargestellt) zur Zirkulation von Hydrauliköl zur Schmierung und Kühlung des Getriebes (3).

12. Nabe nach einem der vorhergehenden Ansprüche 3 oder 4 bis 11, abhängig von Anspruch 3, wobei der Stator eine Innenfläche (52) aufweist, die komplementär zur Schnittstellenfläche (51) der Spindel ist, um eine Verdrehsicherung, beispielsweise eine Keilwellenverbindung, zu bilden.

13. Nabe nach Anspruch 12, wobei die Schnittstellenfläche (51) einen Flüssigkeitswärmetauscher umfasst.

14. Nabe nach Anspruch 13, abhängig von Anspruch 11, wobei die Spindel hohl ist und in deren Hohlraum Folgendes angeordnet ist :
- erste Hydraulikkanäle (C1W, C2W) für die Zirkulation eines Kältemittels zur Kühlung des Elektromotors (2) und/oder
- zweite Hydraulikkanäle (C10, C2O) für die Zirkulation von Hydrauliköl zur Schmierung und Kühlung des Getriebes (3),
und wobei der Wärmetauscher mit den Hydraulikkanälen funktionell verbunden und vollständig in die Spindel (11) integriert ist.

15. Industriefahrzeug für den Transport von Gütern und Personen auf öffentlichen Straßen, umfassend eine Fahrzeugachse (AX), die an ihren jeweils gegenüberliegenden Enden motorisierte Radnaben (1) nach einem der vorhergehenden Ansprüche 1 - 14 umfasst.

## Revendications

1. Moyeu de roue motorisé (1) comprenant :
- un arbre fixe (11) de forme longitudinale, définissant une direction axiale (X) pour supporter en rotation
- une cloche (6a, 6b) configurée pour supporter au moins une roue de véhicule (W1, W2), dans lequel entre l'arbre (11) et la cloche (6), un volume est défini, dans lequel sont logés
- un moteur électrique (2) et
- une transmission (3),
dans lequel le moteur électrique est disposé axialement par rapport à la transmission (3), et la cloche est constituée d'au moins deux parties (6a, 6b), dans lequel la transmission (3) est logée dans une première partie (6a) et le moteur électrique (2) est logé dans une deuxième partie (6b), et dans lequel la deuxième partie a un diamètre (DL) supérieur au diamètre (DS) de la première partie et peut être déconnectée de la première partie.

2. Moyeu selon la revendication 1, dans lequel la deuxième partie de la cloche enveloppe un stator (21) et un rotor (22) du moteur électrique (2), définissant un seul composant connectable et déconnectable du moyeu de roue (1) par un système d'engagement/désengagement axial.

3. Moyeu selon la revendication 2, dans lequel l'arbre comprend une surface d'interface (51) destinée à s'accoupler avec le stator.

4. Moyeu selon la revendication 2 ou 3, dans lequel ladite transmission comprend une ouverture d'entrée définie par une roue (421), avec une denture externe et dans lequel ledit rotor (22) comprend une paroi annulaire (221), munie d'une ouverture centrale dentée s'engageant avec ladite roue (421).

5. Moyeu selon les revendications 3 et 4, dans lequel la roue (421) est interposée entre la transmission et ladite interface (51) et présente un diamètre supérieur ou égal à celui de l'interface (51).

6. Moyeu selon l'une quelconque des revendications précédentes, dans lequel la transmission comprend un train d'engrenages épicycloïdal.

7. Moyeu selon la revendication 6, lorsqu'elle dépend de la revendication 4 ou 5, dans lequel la roue (421) est reliée fonctionnellement à un manchon (4) supporté en rotation par l'arbre (11) pour faire tourner les satellites (31) d'au moins une première cage porte-satellites (311).

8. Moyeu selon la revendication 7, dans lequel ladite première cage porte-satellites (311) est solidaire d'une couronne (5), pour faire tourner les satellites (32) d'au moins une deuxième cage porte-satellites (321).

9. Moyeu selon la revendication 7 ou 8, dans lequel ladite première ou ladite deuxième cage porte-satellites est respectivement reliée fonctionnellement à ladite première partie (6a) de la cloche pour la faire tourner.

10. Moyeu selon l'une quelconque des revendications 7 à 9, comprenant en outre une couronne (63), dentée intérieurement, fixée par rapport à l'arbre et agencée pour s'engrener simultanément avec lesdits satellites (31, 32).

11. Moyeu selon l'une quelconque des revendications précédentes, dans lequel l'arbre est creux et dans sa cavité sont logés au moins :
- des conducteurs électriques (C1E, C2E) pour l'alimentation électrique du moteur électrique (2) et/ou
- des premiers conduits hydrauliques (C1W, C2W) pour la circulation d'un fluide frigorigène destiné au refroidissement du moteur électrique (2) et/ou
- des deuxièmes conduits hydrauliques (C1O, non représenté) pour la circulation d'huile hydraulique destinée à la lubrification et au refroidissement de la transmission (3).

12. Moyeu selon l'une quelconque des revendications 3 ou 4 à 11 précédentes, lorsqu'elles dépendent de la revendication 3, dans lequel ledit stator comprend une face interne (52) complémentaire de ladite surface d'interface (51) de l'arbre, de manière à constituer un accouplement anti-rotation, par exemple un joint cannelé.

13. Moyeu selon la revendication 12, dans lequel ladite surface d'interface (51) comprend un échangeur de chaleur liquide.

14. Moyeu selon la revendication 13, lorsque elle dépend de la revendication 11, dans lequel l'arbre est creux et dans sa cavité sont logés :
- des premiers conduits hydrauliques (C1W, C2W) pour la circulation d'un fluide frigorigène destiné au refroidissement du moteur électrique (2) et/ou
- des deuxièmes conduits hydrauliques (C1O, C20) pour la circulation d'huile hydraulique destinée à la lubrification et au refroidissement de la transmission (3),
et dans lequel ledit échangeur de chaleur est relié fonctionnellement auxdits conduits hydrauliques et est entièrement intégré à l'arbre (11).

15. Véhicule industriel pour le transport de marchandises et de personnes sur la voie publique, comprenant un essieu véhiculaire (AX) comportant, à ses extrémités opposées, des moyeux de roue motorisés (1) selon l'une quelconque des revendications précédentes 1 à 14.
